# EUROPEAN PATENT APPLICATION

(11) **EP 4 653 861 A1**
(43) Date of publication of application: **26.11.2025**
(21) Application number: 23917349.5
(22) Date of filing: 13.12.2023
(51) Int. Cl.: G01N 29/22, F03D 17/00

(54) **METHOD FOR THE DETECTION AND TREATMENT OF ANOMALIES IN STRUCTURES**

(30) Priority: 16.01.2023 ES 202330025
(71) Applicant: Arborea Intellbird S.L., 37185 Villamayor (Salamanca) (ES)
(72) Inventor: BERNABEU, Carlos, 37185 Villamayor (ES)
(86) International application number: PCT/ES2023/070743
(87) International publication number: WO 2024/153835

(57) **Abstract**

The invention relates to a method for the detection and treatment of anomalies in sets of structures associated with the same operator, fixed or mobile, such as wind turbines, or linear industrial infrastructures, which includes performing a first inspection of the set of structures, obtaining a digital model of each of them, processing them to detect anomalies, analyzing synergies between them, performing a second inspection for the same purposes as the first one, comparing the results of both, analyzing the possible evolution of the anomalies and determining the degree of risk of each structure in relation to the other structures of the set. This provides an overall picture of the situation of the set of structures in terms of their maintenance requirements, making it possible to prioritize spending for these purposes.

## Description

### Technical field

This invention applies to the field of structure inspection and proposes a method for the detection of anomalies and its optimized treatment, allowing costs savings by prioritizing certain anomalies over others.

### Background art

Failures in structures, particularly in industrial infrastructure, provoke high risk situations and can lead to accidents or important damage (blackouts, oil leakages, collapses, boat sinkings) making it convenient to anticipate these failures or detecting them at an early stage, by way of rutinary inspections in order to acquire data permitting to derive conclusions that generate predictively oriented actuations.

In infrastructures extending over large areas, like windmills or solar farms, linear infrastructures of great length such as oil pipelines or powerlines, or in air or maritime fleets, anomalies occur with a relative frequence affecting one or other of the components of the set or at different points of a linear infrastructure. Normally, budgets are insufficient to repair the anomalies every time they are detected. Experience shows that the operators allocate budgets to this end which, while being substantial, are generally insufficient to solve all the anomalies. In practice, anomalies that could have waited are fixed while others which are critical to that infrastructure are left unrepaired for too long due to budget shortcomings, thus creating a catastrophic failure risk of which the operator is unaware.

The usual process to detect and quantify anomalies is based on their direct detection using different methodologies, then classifying their importance by assigning a severity degree to them and determining a necessary action and a time frame for implementing it. This is a static method not permitting an adequate quantification of the evolution of each defect, which is an essential factor to determine the degree of priority to intervene in a given structure as compared to others of the same set.

On the other hand, digital sensors known in the art can acquire massive data related to structures but processing them without adequate tools and methods adds up to inspection costs.

The present invention proposes a solution to these problems by a method permitting to classify the detected anomalies and to intervene in respect of them in an order according to their importance, not necessarily in order of occurrence, thus avoiding catastrophic failures while at the same time optimizing structure operators' resources.

### Summary of the invention

The subject matter of this invention is a method for the detection and treatment of anomalies in structures. By structure must be understood any human construction, either mobile (ships, airplanes) or fixed, either for civil use (residential buildings, bridges, roads, train lines) or for other purposes, such as infrastructures for energy production (wind turbines or solar panels) or its transportation (oil and gas pipelines, powerlines.)

The method is implemented over a set of structures, referring to several structures of the same type which, for maintenance purposes, are associated with the same proprietor or operator. These can be structures physically located in the same place (for instance, windmills or solar panels in one farm) or in different places (for instance, telecommunication antennae belonging to a single operator and located in different buildings, or a shipping fleet). It can also be applied to a linear infrastructure, which for logistical purposes are divided into stretches so that, for the purposes of this patent, each stretch is considered a structure on its own and the grouping together of all the stretches constitutes a set of structures.

The purpose of the method is to permit the detection of anomalies in the structures, its quantification and the analysis of their evolution over time, all of it leading to the assignment of a punctuation based on objective parameters (which can be complemented with recommendations including actions and periods of time) and to establishing an order of maintenance priorities whereby the structures integrating the set are organized into an updatable ranking that the maintenance manager can easily handle.

The method for the detection and treatment of anomalies in structures which is the subject matter of this patent comprises, in a first step, executing an overall inspection of the set of structures, employing a device selected from a group comprising a remotely-piloted or autonomous-flying unmanned aircraft, an image acquisition device, a robot vehicle moving on the surface of the structure or a series of sensors installed in the structure.

In a second step, a digital model of each of the structures is obtained.

In the next step, each digital model is processed to detect anomalies in the respective structures. This processing will permit to detect an anomaly, characterizing it, positioning it in relation to the structure, measuring it and quantifying its scope.

The next step is, on the basis of the list of detected anomalies, to establish the existence of synergies between them, in that such synergies are capable of potentiating the anomalies' negative effects. All this can be quantified in numerical data with the aid of specific algorithms.

Afterwards, a second inspection is executed temporarily spaced with respect to the first inspection and new digital models are obtained from it, which are processed to detect anomalies in the respective structures, also establishing the synergies existing between the anomalies.

In the next step, the results of the first and second inspections are contrasted, comprising determining whether the anomalies have evolved between the inspections. If so, an additional factor will be introduced, which can be quantified in respect of the numerical punctuation value of the structure. This factor will consider the magnitude in which the defect has varied in relation to the time elapsed from the earlier inspection in which this variation had not occurred yet.

In the next step, a final numerical punctuation associated with each structure is generated.

Afterwards, a degree of risk is established associated with each structure in connection with the other structures integrating the set, which will permit a classification of all the structures integrating the set in a risk ranking.

In an embodiment, the method comprises the additional step of changing the degree of risk of a structure after carrying out a maintenance task therein.

### Preferred embodiments

In an embodiment, the set of structures over which the method is implemented is a wind farm. The most recurring anomalies in these structures concern wind turbine blades and consist in cracks or in a lack of adherence between its elements, such as the blade's shells and its internal reinforcement structures which, in some models, traverse the blades' interior sides. For this reason, the method will focus in wind turbine blades.

As a starting point for the implementation of the method, a detailed knowledge of the set of structures is required, in this case, concerning each of the blades integrating the set of wind turbines. This knowledge will be acquired through a first inspection of each of them, which is carried out acting over the blade with a device, known in the state of the art, selected from a group comprising a remotely piloted or autonomous-flying unmanned aircraft; an image acquisition device, for instance, a telephoto lens handled by a technician located in the proximity of the structure; a robot vehicle moving on the surface of the structure or a series of sensors installed in the structure.

The devices for the performance of the inspection are endowed with known apparatuses permitting georeferenced data acquisition, for instance taking images of the structure, echography, ultrasounds, X-rays or thermography. Patent document EP3392652 A1 (ARBOREA INTELLBIRD, S.L.), 24.10.2018, "Method for inspecting materials and aerial vehicle to implement said method" describes a method and its corresponding vehicle for the implementation of this sort of inspection.

In a second step, a digital model of each of the structures is obtained, based on the georeferenced data acquired in the respective blade inspections.

The digital model is processed with the purpose of detecting anomalies in the structures. Preferably, the nature of each anomaly is defined and the anomaly is positioned and measured. In this way, the first inspection will provide information on the condition of each blade at this starting point and to precisely determine its weak points where problems could arise, information which will be considered for future inspections.

In the next step, and based on the list of detected anomalies, the existence of synergies between them is established. These synergies could have the effect of potentiating the negative effects of the anomalies. All this can be quantified in numerical data with the aid of specific algorithms.

In the next step, a second inspection is executed according to the process which has been described. These two inspections will be separated by generally constant and predefined time periods. In the case of wind turbine blades, the second inspection can be carried out one year after the first inspection, as this is the time lapse generally observed for routine inspections on these objects.

In the next step, and in respect of each blade of each wind turbine in the farm, the results of the successive inspections are contrasted. This operation comprises the detection of potential variations in the detected anomalies, and their relevance which can be translated into numerical factors establishing a relationship between the magnitude in which the anomaly has increased and the time elapsed since the earlier inspection in which this anomaly had not occurred yet. Using algorithms, a numerical value of such variations is obtained, which is utilized in the punctuation of the structure.

Afterwards, the method establishes a relationship between all the risk factors in order to generate a final numerical punctuation associated to each structure.

In a further step, a list is generated according to the degree of risk associated with each structure in connection with the other structures integrating the set. In this way, there will be a ranking of the situation of the set of structures in respect of maintenance needs. The maintenance manager will be in a position to undertake maintenance tasks according to the established ranking, which will allow to allocate resources to the comparatively more serious problems and to postpone maintenance tasks in respect of other anomalies where the degree of risks allows it.

Additionally, the method comprises changing the degree of risk associated with a structure of the set after carrying out a maintenance task therein.

## Claims

1. Method for the detection and treatment of anomalies in structures comprising the steps of:
a) Executing an overall inspection of the set of structures, employing a device selected from a group comprising a remotely piloted or autonomous-flying unmanned aircraft; an image acquisition device, a robot vehicle moving on the surface of the structure or a series of sensors installed in the structure.
b) Obtaining a digital model of each of the structures.
c) Processing each digital model to detect anomalies in the respective structures.
d) Establishing the existence of synergies between the anomalies.
e) Executing a second inspection temporarily spaced with respect to the first inspection and obtaining from it new digital models and processing them to detect anomalies in the respective structures.
f) Contrasting the results of the first and second inspections, comprising determining the nature of the detected anomalies, their relevance, the relationship between the anomalies and the evolution which they could have experienced with respect to each other.
g) Generating a final numerical punctuation associated to each structure.
h) Determining a degree of risk associated with each structure in connection with the other structures integrating the set.

2. Method for the detection and treatment of anomalies in structures according to claim 1, comprising the additional step of changing the degree of risk of a structure after carrying out a maintenance task therein.
